# EUROPÄISCHE PATENTSCHRIFT

(11) **EP 4 004 999 B1**
(45) Veröffentlichungstag und Bekanntmachung des Hinweises auf die Patenterteilung: **09.10.2024**
(21) Anmeldenummer: 20739672.2
(22) Anmeldetag: 10.07.2020
(51) Int. Cl.: H01M 4/92, H01M 4/86, H01M 4/88, H01M 8/1004, H01M 8/10

(54) **MEMBRANELEKTRODENANORDNUNG UND BRENNSTOFFZELLE**
MEMBRANE ELECTRODE ASSEMBLY AND FUEL CELL
ASSEMBLAGE MEMBRANE ÉLECTRODES ET PILE À COMBUSTIBLE

(30) Priorität: 26.07.2019 DE 102019211127
(43) Veröffentlichungstag der Anmeldung: 01.06.2022
(73) Patentinhaber: Greenerity GmbH, 63755 Alzenau (DE)
(72) Erfinder: SUCHSLAND, Jens-Peter, 63755 Alzenau (DE); MARTIN, Thomas, 67500 Haguenau (FR); BINDER, Matthias, 63571 Gelnhausen (DE); GEHRIG, Dominik, 63457 Hanau (DE); EICKES, Christian, 60431 Frankfurt am Main (DE)
(74) Vertreter: Hoefer & Partner Patentanwälte mbB
(86) Internationale Anmeldenummer: PCT/EP2020/069634
(87) Internationale Veröffentlichungsnummer: WO 2021/018554

(56) Entgegenhaltungen:
- EP-A1- 0 736 921
- JP-A- H10 270 055
- US-A1- 2006 099 489

## Beschreibung

Die Erfindung betrifft eine Membranelektrodenanordnung mit hoher katalytischer Aktivität bei verbesserter Toleranz gegenüber Kohlenstoffmonoxid (CO) und eine Brennstoffzelle, die diese Membranelektrodenanordnung umfasst.

Aus dem Stand der Technik sind Membranelektrodenanordnungen für Brennstoffzellenanwendungen bekannt, die eine protonenleitfähige Membran umfassen, die auf der einen Seite mit einer Anode und auf der anderen Seite mit einer Kathode beschichtet ist. Die Anode enthält dabei meistens Platin als Katalysator, das die Umwandlung von der Brennstoffzelle zugeführtem Wasserstoff zu Protonen katalysiert. Für die Reduktion von Sauerstoff auf der Kathodenseite wird ebenfalls zumeist Platin als Katalysator eingesetzt. Nachteilig an bisherigen Membranelektrodenanordnungen ist ihre geringe Toleranz gegenüber CO, das als Katalysatorgift wirkt und sekundär die Leistung der Membranelektrodenanordnung und damit auch einer Brennstoffzelle, reduziert.

EP 0736921 A1 beschreibt eine Elektrode, die eine erste katalytische Komponente, die an Reaktionsstellen in der Gasphase aktiv ist, und eine zweite katalytische Komponente, die an elektrochemischen Reaktionsstellen aktiv ist, umfasst, wobei jede katalytische Komponente entweder als separate Schicht oder als einzelne gemischte Schicht oder als Kombination aus einer separaten Schicht und einer gemischten Schicht vorliegt. Die Elektrode weist eine verbesserte Toleranz gegenüber Giften wie Kohlenmonoxid und Kohlendioxid auf.

JPH10270055 A beschreibt die Herstellung einer lokalen Batterie zwischen Katalysatoren und eine Beschleunigung der elektrochemischen Katalysatorreaktion durch Anordnung von ionendurchlässigem Material, in dem sich Ionen bewegen können, und elektronendurchlässigem Material, in dem sich Elektronen zwischen mehreren Katalysatoren bewegen können. Im Detail beschreibt JPH10270055 A einen Katalysator A1 und Katalysator B2, deren natürliche Potentiale unterschiedlich sind, die so angeordnet sind, dass sie über das elektronendurchlässige Material und das ionendurchlässige Material miteinander in Kontakt stehen. Auf dem Katalysator B2, dessen natürliches Potenzial niedrig ist und nahe am Wasserstofferzeugungspotenzial liegt, wird ein Reaktant oxidiert, um ein Produkt zu erzeugen. Erzeugte Ionen und Elektronen erreichen den Katalysator A1 durch das elektronendurchlässige Material und das ionendurchlässige Material, und ein weiterer Reaktant wird auf dem Katalysator A1 reduziert, um ein weiteres Produkt zu erzeugen. Als Katalysator werden ein Katalysator auf Polybasis, der Platin und ein von Platin verschiedenes erstes Metall enthält, und ein Katalysator auf Polybasis, der Platin und ein von Platin verschiedenes zweites Metall enthält, verwendet. Als ionendurchlässiges Material werden Phosphorsäure, Schwefelsäure, feste hochmolekulare Elektrolyte oder deren Mischungen verwendet. Der Katalysator befindet sich in einem elektronendurchlässigen Material.

US 2006/099489 A1 lehrt eine Brennstoffzellenelektrode, die eine Katalysatorschicht und ein Elektrodensubstrat umfasst, das die Katalysatorschicht trägt und ein leitfähiges Substrat umfasst. Die Katalysatorschicht umfasst einen ersten Katalysator, der auf einem Kohlenstoffträger getragen wird, und einen zweiten Katalysator, der auf einem anorganischen Oxidträger getragen wird. Der erste Katalysator umfasst eine Legierung aus Pt und einem Metall, ausgewählt aus der Gruppe bestehend aus Co, Ni und einer Mischung davon, und der zweite Katalysator umfasst eine Legierung aus Pt und einem Metall, ausgewählt aus der Gruppe bestehend aus Co, Ni und einer Mischung davon.

Es ist Aufgabe der Erfindung eine Membranelektrodenanordnung bereitzustellen, die sich durch eine hohe katalytische Aktivität und ferner durch eine hohe CO-Toleranz auszeichnet. Darüber hinaus ist es Aufgabe der Erfindung eine Brennstoffzelle mit dauerhaft hoher Leistungsdichte bereitzustellen.

Die Lösung dieser Aufgabe erfolgt durch die Merkmale der unabhängigen Ansprüche. Die abhängigen Ansprüche beinhalten vorteilhafte Weiterbildungen der Erfindung.

Somit wird die Aufgabe gelöst durch eine Membranelektrodenanordnung, die eine Kathode, eine Anode und eine protonenleitfähige Membran umfasst. Die Membran ist dabei zwischen der Kathode und der Anode angeordnet. Die Kathode umfasst einen ersten metallhaltigen Katalysator und ein protonenleitfähiges lonomer. Der erste Katalysator ist in dem lonomer vorzugsweise homogen verteilt, so dass sich über die gesamte Kathode eine hohe katalytische Aktivität ergibt und Sauerstoff effektiv umgesetzt wird. Der erste Katalysator ist im Einzelnen nur dahingehend beschränkt, dass er die Kathodenreaktion, also die Reduktion von Sauerstoff, katalysiert.

Die Anode umfasst ebenfalls ein protonenleitfähiges lonomer und daneben einen zweiten, die Oxidation von Wasserstoff zu Protonen katalysierenden metallhaltigen Katalysator. Der zweite Katalysator katalysiert mit anderen Worten die Anodenreaktion, also die Umwandlung (Oxidation) von Wasserstoff zu Protonen. Die Protonen wandern sodann durch die protonenleitfähige Membran und reagieren anschließend mit dem reduzierten Sauerstoff.

Ferner umfasst die Anode auch einen dritten metallhaltigen Katalysator, der die Reaktion von CO zu CO_{2,} also die Oxidation von CO, katalysiert. CO, das als Katalysatorgift wirkt, und die Leistungsfähigkeit der Elektroden reduziert, kann beispielsweise durch das Wasserstoff enthaltende Brenngas mit eingeschleppt werden. Wird es nicht schnell entfernt, blockiert es die aktiven Stellen der Katalysatoren und verringert die Leistungsdichte der Membranelektrodenanordnung signifikant. Durch das Vorsehen des dritten Katalysators wird vorhandenes CO zu CO₂ oxidiert und damit unschädlich gemacht. CO₂ hemmt die Leistungsfähigkeit der Katalysatoren nicht, so dass durch den dritten Katalysator die Toleranz gegenüber CO erhöht wird. Das Gesamtmasseverhältnis an Platin des zweiten Katalysators und an Platin des dritten Katalysators zum Gesamtmasseverhältnis an Metallen des zweiten Katalysators und des dritten Katalysators mit Ausnahme von Platin ist größer als 3:1. Erst durch dieses Masseverhältnis wird in der erfindungsgemäßen Membranelektrodenanordnung eine hohe Langzeitstabilität der Leistungsdichte und gleichzeitig eine hohe CO-Toleranz erzielt.

Als metallhaltige erste, zweite und dritte Katalysatoren kommen jegliche metallhaltige Katalysatoren in Frage, die die entsprechende gewünschte Reaktion katalysieren und mindestens ein Metall enthalten. Das Metall kann dabei in unterschiedlichen Formen vorliegen. Beispielhafte Katalysatoren umfassen (reine, also elementare) Metalle, wie z.B. Edelmetalle, und darunter Ir, Ru und Pt, aber auch Metalloxide und Legierungen von zwei oder mehreren Metallen. Der zweite Katalysator und der dritte Katalysator können dasselbe Metall enthalten, liegen dann jedoch in unterschiedlicher Form vor. Beispielsweise ist dann der zweite Katalysator ein (reines) Metall und der dritte Katalysator eine Legierung. Oder der zweite Katalysator ist ein (reines) Metall und der dritte Katalysator ist ein Metalloxid. Oder der zweite Katalysator ist ein Metalloxid und der dritte Katalysator ist eine Legierung. Beliebige Kombinationen von metallhaltigen Katalysatoren in den zweiten und dritten Katalysatoren sind möglich.

Das Masseverhältnis bestimmt sich basierend auf der jeweiligen Masse des Metalls (oder der Metalle) des entsprechenden metallhaltigen Katalysators. Dabei kann der zweite Katalysator oder der dritte Katalysator oder können der zweite Katalysator und der dritte Katalysator Platin enthalten. Es ist nicht erforderlich, dass sowohl der zweite Katalysator als auch der dritte Katalysator Platin enthalten, solange das Masseverhältnis der Gesamtmasse an Platin im zweiten und dritten Katalysator zur Gesamtmasse an den übrigen Metallen im zweiten Katalysator und im dritten Katalysator, also an allen Metallen mit Ausnahme von Platin, größer ist als 3 : 1.

Erfindungsgemäß beträgt das Gesamtflächengewicht an Platin des zweiten Katalysators und an Platin des dritten Katalysators weniger als 0,4 mg/cm², wodurch sehr gute katalytische Eigenschaften bei gleichzeitig minimalem finanziellen Aufwand erhalten werden können.

Die CO-Toleranz wird bei gleichzeitig sehr guter Leistungsdichte der Membranelektrodenanordnung dadurch verbessert werden, dass das Gesamtmasseverhältnis an Platin des zweiten Katalysators und an Platin des dritten Katalysators zum Gesamtmasseverhältnis an Metallen des zweiten Katalysators und des dritten Katalysators mit Ausnahme von Platin kleiner oder gleich 9:1 ist.

Gemäß einer vorteilhaften Weiterbildung sind der zweite Katalysator und der dritte Katalysator jeweils auf einem elektrisch leitfähigen Träger angeordnet. Der elektrisch leitfähige Träger, auf dem der zweite Katalysator und der dritte Katalysator angeordnet sind, kann dabei jeweils derselbe elektrisch leitfähige Träger sein oder es können unterschiedliche elektrisch leitfähige Träger verwendet werden. Hierdurch lässt sich die elektrische Leitfähigkeit der Anode verbessern, was der Leistungsdichte der Membranelektrodenanordnung zuträglich ist. Der zweite Katalysator und/oder der dritte Katalysator können dabei in diskreten Elektrodenschichten vorhanden sein oder homogen in einer gemeinsamen Elektrodenschicht verteilt sein. Im ersten Fall ergibt sich für die Membranelektrodenanordnung folgende Schichtabfolge: Kathode/Membran/Anodenschicht 1/ Anodenschicht 2. Im zweiten Fall ergibt sich für die Membranelektrodenanordnung folgende Schichtabfolge: Kathode/Membran/Anode.

Aufgrund der sehr hohen Reaktivität und damit der guten katalysierenden Eigenschaften, sind der zweite Katalysator und der dritte Katalysator ausgewählt aus: einer Legierung, einem Metall, einem Metalloxid oder einer Mischung dieser Verbindungen. Mindestens eine dieser metallhaltigen Verbindungen des zweiten und/oder dritten Katalysators enthält dabei Platin, um das Verhältnis der Gesamtmasse an Platin des zweiten Katalysators und an Platin des dritten Katalysators zum Gesamtmasseverhältnis an Metallen des zweiten Katalysators und des dritten Katalysators mit Ausnahme von Platin auf größer 3:1 einzustellen. Der zweite Katalysator ist vorzugsweise Platin. Weiter vorteilhaft ist der dritte Katalysator eine Platinlegierung, da Platinlegierungen sehr gut im Lichte einer CO-Bindungs- und Umsetzungsaktivität ausgewählt werden können.

Besonders vorteilhaft umfasst die Legierung Platin und mindestens ein Element, ausgewählt aus der Gruppe bestehend aus Ru, Rh, Ni, Cu und Ir. Unter den vorstehend genannten Legierungselementen ist Ru besonders bevorzugt, da es sowohl CO sehr schnell und damit effektiv bindet als auch die Umwandlung zu CO₂ beschleunigt.

Weiter vorteilhaft ist der elektrisch leitfähige Träger oder sind die elektrisch leitfähigen Träger ausgewählt aus leitfähigem Kohlenstoff, anorganischen Oxiden und Mischungen daraus. Besonders vorteilhaft aufgrund der erleichterten Verarbeitung wird entweder elektrisch leitfähiger Kohlenstoff oder es werden eines oder mehrere Oxide eingesetzt.

Hierbei ist es weiter vorteilhaft, wenn der elektrisch leitfähige Träger oder die elektrisch leitfähigen Träger eine spezifische Oberfläche von 50 bis 1000 m²/g aufweisen, da somit der zweite Katalysator und der dritte Katalysator besonders fein und gleichmäßig in der Anode verteilt werden können. Dies verbessert die Aktivität der Anode aufgrund der Erhöhung von Bindungsplätzen am Katalysator zur Durchführung der katalytischen Reaktion. Die spezifische Oberfläche wird dabei mittels Stickstoffadsorption (BET-Verfahren) gemäß DIN ISO 9277:2003-05 "Bestimmung der spezifischen Oberfläche von Feststoffen durch Gasadsorption nach dem BET-Verfahren" bestimmt.

Eine weitere vorteilhafte Weiterbildung sieht vor, dass das Flächengewicht an Platin des zweiten Katalysators weniger als 0,3 mg/cm² beträgt. Hierbei wird unter dem Flächengewicht an Platin das Gewicht an Platin des zweiten Katalysators bezogen auf die zur Membran gerichtete geometrische Fläche der Anode verstanden. Durch ein Flächengewicht an Platin des zweiten Katalysators von weniger als 0,3 mg/cm² können bei sehr hoher katalytischer Aktivität der Anode die Kosten möglichst gering gehalten werden.

Um hierbei besonders gute katalytische Eigenschaften zu erzielen, beträgt vorteilhaft das Gesamtflächengewicht an Platin des zweiten Katalysators und an Platin des dritten Katalysators mehr als 0,015 mg/cm² und insbesondere mehr als 0,03 mg/cm².

Aus vorstehenden Gründen ist es weiterhin bevorzugt, wenn das Flächengewicht an Platin des zweiten Katalysators mehr als 0,015 mg/cm² und insbesondere mehr als 0,03 mg/cm² beträgt.

Um eine besonders hohe Langzeitstabilität der Leistung der Membranelektrodenanordnung, also eine hohe katalytische Aktivität in der Umsetzung der verwendeten Brennstoffe, mit einer sehr guten CO-Toleranz zu erhalten, ist vorzugsweise das Masseverhältnis an Platin des ersten Katalysators zum Gesamtmasseverhältnis an Metallen des zweiten Katalysators und des dritten Katalysators mit Ausnahme von Platin größer als 12:1 und insbesondere größer als 35 : 1. Dieses Verhältnis erlaubt eine langanhaltend hohe Leistungsdichte auch dann, wenn ein Legierungsmetall, wie beispielsweise Ruthenium, während des Betriebs von der Anode auf die Kathode übertritt. Dieser Vorgang kann zu einer Reduzierung der katalytischen Aktivität der Kathode führen und ist dann weniger ausgeprägt, wenn die zuvor genannten Katalysatorverhältnisse eingehalten werden.

Aufgrund der sehr guten katalytischen Aktivität bei der Umsetzung von Sauerstoff mit Protonen zu Wasser, ist der erste Katalysator vorteilhafterweise ausgewählt aus Platin, Platinlegierungen, Übergangsmetallen, Übergangsmetalllegierungen und Mischungen davon.

Um eine möglichst gleichmäßige Verteilung bei geringer Katalysatorkonzentration und damit eine sehr hohe katalytische Aktivität der Kathode zu erzielen, ist gemäß einer weiteren vorteilhaften Weiterbildung der erste Katalysator auf einem elektrisch leitfähigen Träger angeordnet. Als elektrisch leitfähiger Träger kann ein elektrisch leitfähiger Träger verwendet werden, wie er vorstehend für das Trägern des zweiten Katalysators und des dritten Katalysators als vorteilhaft beschrieben wurde.

Sofern als erster Katalysator eine Übergangsmetalllegierung eingesetzt wird, ist diese insbesondere ausgewählt aus Platin und Cobalt. Platin-Cobalt-Legierungen haben sich als gut verfügbar und eine hohe katalytische Aktivität aufweisend herausgestellt.

Ebenfalls erfindungsgemäß wird auch eine Brennstoffzelle beschrieben, die die vorstehend offenbarte Membranelektrodenanordnung umfasst. Aufgrund der Verwendung der erfindungsgemäßen Membranelektrodenanordnung wird eine Brennstoffzelle mit dauerhaft hoher Leistungsdichte erzielt, die tolerant ist gegenüber CO.

Die für die erfindungsgemäße Membranelektrodenanordnung beschriebenen Vorteile, vorteilhaften Effekte und Weiterbildungen finden auch Anwendung auf die erfindungsgemäße Brennstoffzelle.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine Membranelektrodenanordnung gemäß einer Ausführungsform im Schnitt,
Fig. 2 eine Grafik, veranschaulichend Testergebnisse zur Leistungsstabilität und CO-Stabilität,
Fig. 3 eine Tabelle, veranschaulichend die Testergebnisse aus Figur 2 zur Leistungsstabilität und
Fig. 4 eine Tabelle, veranschaulichend die Testergebnisse aus Figur 2 zur CO-Stabilität.

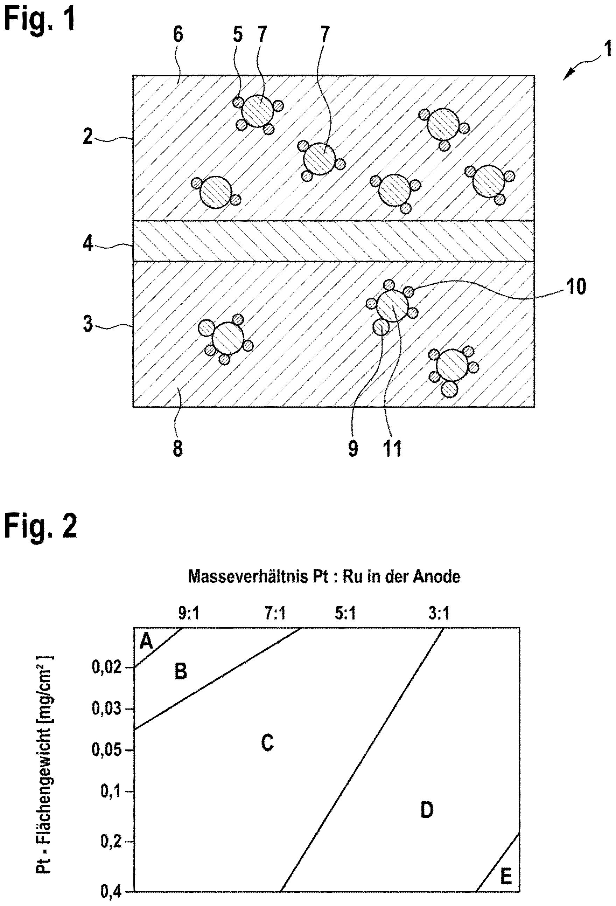

In Figur 1 sind nur die wesentlichen Merkmale der Membranelektrodenanordnung dargestellt. Alle übrigen Merkmale sind der Übersichtlichkeit halber weggelassen.

Figur 1 zeigt eine Membranelektrodenanordnung 1, die eine Kathode 2 und eine Anode 3 umfasst, die zwischen sich eine protonenleitfähige Membran 4 aufweisen. Die Anode 3 ist dabei die Elektrode, an der Wasserstoff zu Protonen oxidiert wird, die dann zu Wasser weiterreagieren. Die Kathode 2 ist die Elektrode, an der Sauerstoff reduziert wird.

Die Kathode 2 umfasst einen ersten Katalysator 5 und ein protonenleitfähiges lonomer 6, wobei der erste Katalysator 5 die Reduktion von Sauerstoff katalysiert und insbesondere Platin, eine Platinlegierung, ein oder mehrere Übergangsmetalle oder Mischungen davon umfasst. Der erste Katalysator ist vorzugsweise auf einem elektrisch leitfähigen Träger 7 angeordnet.

Die Anode 3 umfasst ebenfalls ein protonenleitfähiges lonomer 8, einen zweiten, die Reaktion von Wasserstoff zu Protonen katalysierenden Katalysator 9 und einen dritten, die Reaktion von CO zu CO₂ katalysierenden Katalysator 10. Sowohl der zweite Katalysator 9 als auch der dritte Katalysator 10 sind auf einem elektrisch leitfähigen Träger 11 geträgert.

Der zweite Katalysator 9 ist Platin und der dritte Katalysator 10 ist eine Platinlegierung. In der Platinlegierung bildet Platin den Hauptbestandteil in Masse% und mindestens eines der Elemente, ausgewählt aus der Gruppe bestehend aus Ru, Rh, Ni, Cu und Ir dient als Dotierungselement.

Das Gesamtmasseverhältnis an Platin des zweiten Katalysators 9 und an Platin des dritten Katalysators 10 zum Gesamtmasseverhältnis an Metallen des zweiten Katalysators 9 und des dritten Katalysators 10 mit Ausnahme von Platin beträgt mehr als 3:1 und ist kleiner oder gleich 9:1.

Die Membranelektrodenanordnung 1 zeichnet sich durch eine hohe Langzeitstabilität der Leistungsdichte und sehr hohe Toleranz gegenüber CO aus.

Des Weiteren wurden folgende Versuche durchgeführt. Es wurden Membranelektrodenanordnungen hergestellt mit einer Kathode, die als ersten metallhaltigen Katalysator Platin mit einem Flächengewicht von 0,40 mg_{Pt}/cm² in Form einer Platin-Cobalt-Legierung auf einem hochoberflächigen Kohlenstoff und daneben ein protonenleitfähiges lonomer mit einer lonenaustauschkapazität von etwa 1,27 meq/g umfasste, und einer Anode die ebenfalls ein protonenleitfähiges lonomer mit einer lonenaustauschkapazität von etwa 1,27 meq/g, einen zweiten, die Reaktion von Wasserstoff zu Protonen katalysierenden metallhaltigen Katalysator und einen dritten, die Reaktion von CO zu CO₂ katalysierenden metallhaltigen Katalysator umfasste. Als zweiter Katalysator wurde Platin verwendet und als dritter Katalysator eine Platin-Ruthenium-Legierung.

In den hergestellten Membranelektrodenanordnungen wurde jeweils das Gesamtmasseverhältnis an Platin des zweiten Katalysators und an Platin des dritten Katalysators (hier 57,4 Masse%) zum Gesamtmasseverhältnis an Metallen des zweiten Katalysators (hier 0 Masse%) und des dritten Katalysators (hier 42,6 Masse%) mit Ausnahme von Platin (Ru) variiert.

Die Herstellung der Membranelektrodenanordnung war allgemein wie folgt:
Zunächst wurden zur Herstellung von Anoden- und Kathodenkatalysatorschichten separate Dispersionen ("Tinten") hergestellt, indem die jeweiligen Katalysatoren, protonenleitfähiges lonomer und geeignete Lösungsmittel - ausgewählt aus Wasser und organischen Lösungsmitteln - mittels eines geeignete Dispersionsaggregats dispergiert wurden. Zur Herstellung der Anodenkatalysatordispersion wurden der zweite und der dritte Katalysator verwendet und in der Zusammensetzung so variiert, dass unterschiedliche Verhältnisse von Platin zu Nicht-Platin-Metallen realisiert wurden. Anoden- und Kathodentinte wurden anschließend auf PTFE-Trägerfolien beschichtet und getrocknet, um Anoden- und Kathodenschichten mit dem gewünschten Flächengewicht (Beladung) in Bezug auf das Platinmetall herzustellen. Anschließend wurde eine protonenleitfähige Membran zwischen den sich auf den Trägerfolien befindlichen Anoden- und Kathodenschichten angeordnet und so unter Druck und Hitze verpresst, dass ein Transfer der zuvor hergestellten Elektrodenschichten auf die Membran stattfand. Als lonomere können perfluorierte oder auch kohlenwasserstoffbasierte, mit Säuregruppen (z.B. Sulfonsäuren oder Carbonsäuren) funktionalisierte Polymere eingesetzt werden. Dabei sind die Säuregruppen üblicherweise in einer Seitenkette angeordnet, deren Kettenlänge unterschiedlich lang sein kann und die sowohl linear als auch verzweigt vorliegen kann. Als organische Lösungsmittel können üblicherweise Alkohole, Ketone, Aldehyde, Carbonsäuren, Carbonsäureester, Ether oder Amide, jeweils mit unterschiedlicher Kettenlänge sowie cyclischer Strukturen, oder auch Mischungen davon Verwendung finden.

Anode 1 (Pt : Ru = 9 : 1):
7,00 g eines reinen Platin-Katalysators, bestehend aus 19,9 Masse% Platin und 80,1 Masse% Kohlenstoffträger, und 0,77 g eines Platin-Ruthenium-Legierungskatalysators, bestehend aus 30,5 Masse % Platin, 23,6 Masse% Ruthenium und 45,9 Masse% Kohlenstoffträger, wurden gemeinsam mit 19,20 g einer lonomerdispersion, bestehend aus 24,9% protonenleitfähigem lonomer sowie 75,1 Masse% Wasser, sowie 73,03 g weiterer Lösungsmittel für 1 h in einem geeigneten Dispersionsaggregat dispergiert. Die so erhaltene Katalysatortinte wurde auf einer PTFE-Trägerfolie beschichtet und die Nassschichtdicke derart eingestellt, dass ein Flächengewicht in Bezug auf Platin zwischen 0,015 mg/cm² und 0,2 mg/cm² erhalten wurde.

Anode 2 (Pt: Ru = 6 : 1):
6,64 g eines reinen Platin-Katalysators, bestehend aus 19,9 Masse % Platin und 80,1 Masse% Kohlenstoffträger, und 1,19 g eines Platin-Ruthenium-Legierungskatalysators, bestehend aus 30,5 Masse% Platin, 23,6 Masse% Ruthenium und 45,9 Masse% Kohlenstoffträger, wurden gemeinsam mit 18,88 g einer lonomerdispersion, bestehend aus 24,9% protonenleitfähigem lonomer sowie 75,1 Masse% Wasser, sowie 73,29 g weiterer Lösungsmittel für 1 h in einem geeigneten Dispersionsaggregat dispergiert. Die so erhaltene Katalysatortinte wurde auf einer PTFE-Trägerfolie beschichtet und die Nassschichtdicke derart eingestellt, dass ein Flächengewicht in Bezug auf Platin zwischen 0,015 mg/cm² und 0,2 mg/cm² erhalten wurde.

Anode 3 (Pt: Ru = 3 : 1):
4,76 g eines reinen Platin-Katalysators, bestehend aus 19,9 Masse% Platin und 80,1 Masse% Kohlenstoffträger, und 2,34 g eines Platin-Ruthenium-Legierungskatalysators, bestehend aus 30,5 Masse% Platin, 23,6 Masse% Ruthenium und 45,9 Masse% Kohlenstoffträger, wurden gemeinsam mit 15,62 g einer lonomerdispersion, bestehend aus 24,9% protonenleitfähigem lonomer sowie 75,1 Masse% Wasser, sowie 77,27 g weiterer Lösungsmittel für 1 h in einem geeigneten Dispersionsaggregat dispergiert. Die so erhaltene Katalysatortinte wurde auf einer PTFE-Trägerfolie beschichtet und die Nassschichtdicke derart eingestellt, dass ein Flächengewicht in Bezug auf Platin zwischen 0,015 mg/cm² und 0,2 mg/cm² erhalten wurde.

Kathode:
6,67 g eines Platin-Kobalt-Legierungskatalysators, bestehend aus 48,5 Masse% Platin, 4,9 Masse% Kobalt und 46,6 Masse% Kohlenstoffträger, und 93,33 g einer lonomerdispersion, bestehend aus 3,60 Masse% protonenleitfähigem lonomer sowie 96,4 Masse% Wasser und weiterer Lösungsmittel wurden für 1 h in einer Rührwerkskugelmühle dispergiert. Die so erhaltene Katalysatortinte wurde auf einer PTFE-Trägerfolie beschichtet und die Nassschichtdicke derart eingestellt, dass ein Flächengewicht in Bezug auf Platin von 0,4 mg/cm² erhalten wurde.

Herstellung des Elektroden-Membran-Verbunds:
Geträgerte Anoden- und Kathodenkatalysatorschicht wurden auf entgegengesetzten Seiten einer protonenleitfähigen Membran deckungsgleich angeordnet und anschließend in einer Presse bei einer Temperatur von 160°C für 5 min unter Druck verpresst, so dass ein Verbund zwischen Elektroden und Membran entstand und die Elektroden rückstandsfrei von den entsprechenden PTFE-Trägerfolien entfernt werden konnten.

### Die Messparameter waren wie folgt:

### Leistungsdichte und CO-Toleranz:

Zunächst wurde die Zellspannung der katalysatorbeschichteten Membranen ohne CO Kontamination mittels einer Polarisationskurve untersucht. Die Zelltemperatur betrug 80°C, Die Gastemperatur betrug 64°C, die Befeuchtung lag entsprechend bei 50%RH. Der Vordruck am Gaseinlass lag bei 1,5 bar.

Anschließend wurde der Wasserstoffgasstrom auf der Anodenseite mit 0,2 ppm CO angereichert und bei einer Stickstoffverdünnung von 30 Vol% der Anode zur Verfügung gestellt. Die Leistungsdichte wurde erneut untersucht. Die Reduzierung der Zellspannung bei einer Stromdichte von 1,2 A cm⁻² ist ein Indikator für die CO-Toleranz der katalysatorbeschichteten Membran.

### Start-up/shut-down-Zyklen Test (SUSD)

SUSD-Zyklen wurden in einem Gasschaltversuch mit genau definierter Verweilzeit der Wasserstoff/Luft-Grenze durchgeführt. Die Anodenseite war dafür mit einem Dreiwegeventil ausgestattet, das das Umschalten von trockener Luft zu befeuchtetem Wasserstoff und umgekehrt ermöglichte. Um das Anfahren (*Start-up*) zu simulieren, wurde das Anodenflussfeld zunächst mit trockener Luft gefüllt. Anschließend wurde auf befeuchteten Wasserstoff umgeschaltet, was zur Ausbildung einer Wasserstoff-Luft-Grenze führte. Umgekehrt wurde beim Abschaltvorgang (*Shut-down*), das Wasserstoff-gefüllte Anodenflussfeld mit Luft gespült, was zur Ausbildung einer Luft-Wasserstoff-Grenze führte. Die Betriebsbedingungen wurden dabei in beiden Kammern (Anode und Kathode) der Zelle während des SUSD-Versuchs konstant gehalten (1,5 bar abs., Einlass, Zelltemperatur 35°C, Gastemperatur 30°C und 75%RH). Die Verweilzeit der Wasserstoff-Luft-Grenze in der Zelle wurde durch das Volumen des Flussfelds und den Volumenstrom der zugeführten Gase definiert und betrug 0,3 s. Die Zeit zwischen *Start-up* und *Shut-down* wurde auf 120 s eingestellt. Insgesamt wurden 500 SUSD-Zyklen wiederholt.

### Leistungsdichte und CO-Toleranz nach SUSD-Zyklen:

Im Anschluss an die SUSD-Zyklen wurde erneut eine Polarisationskurve gemessen. Die Reduzierung der Zellspannung wurde in Relation zur ersten Messung untersucht. Anschließend wurde wiederum die CO-Toleranz analog der zuvor beschriebenen Methode untersucht.

Wie aus der Grafik in Figur 2 ersichtlich ist, wurde das Gesamtmasseverhältnis an Platin des zweiten Katalysators und an Platin des dritten Katalysators zum Gesamtmasseverhältnis an Metallen des zweiten Katalysators und des dritten Katalysators mit Ausnahme von Platin (Ru) in einem Bereich von etwa 10 : 1 bis etwa 2 : 1 variiert. Hinsichtlich der Leistungsstabilität und CO-Stabilität der Membranelektrodenanordnungen konnten 5 Bereiche unterschieden werden: Im Bereich A, also bei einem Masseverhältnis von Pt : Ru von mehr als 9 : 1 und einer geringen Beladung der Anode in Bezug auf das Flächengewicht des Platin, war die CO-Toleranz deutlich reduziert. Im Bereich E, also bei einem Masseverhältnis von Pt : Ru von weniger als 3 : 1 und einer hohen Beladung der Anode in Bezug auf das Flächengewicht des Platin war die Langzeitstabilität der (katalytischen) Leistung der Membranelektrodenanordnungen deutlich reduziert. In den Bereichen B und D wurden sowohl für die Langzeitstabilität der (katalytischen) Leistung als auch für die CO-Toleranz gute Ergebnisse erzielt, wobei im Bereich C die besten Ergebnisse erhalten wurden.

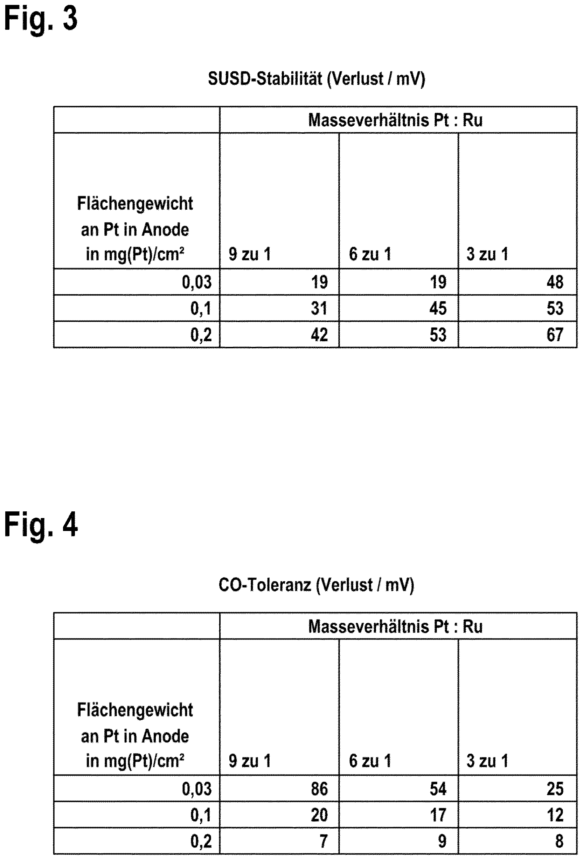

Die Tabelle in Figur 3 veranschaulicht die Testergebnisse aus Figur 2. Die Tabelle zeigt die Langzeitstabilität der (katalytischen) Leistung der Membranelektrodenanordnung, bzw. den Verlust der Zellspannung nach 500 SUSD-Zyklen bei einer Stromdichte von 1,2 A cm⁻², wobei besonders für hohe Ru-Gehalte, d.h. für eine hohe Anodenbeladung von 0,2 mg cm⁻² in Kombination mit einem Masseverhältnis Pt : Ru von 3 : 1, eine deutliche Reduzierung der Zellspannung von über 50 mV beobachtet wurde.

Die Tabelle in Figur 4 veranschaulicht ebenfalls die Testergebnisse aus Figur 2. Die Tabelle zeigt, dass beim Masseverhältnis Pt : Ru in einem Bereich von 9 : 1 bis 3 : 1 gute CO-Toleranzen und Leistungen der Membranelektrodenanordnung erhalten werden, wobei an der Grenze zu niedrigen Ru-Gehalten, d.h. bei sehr niedriger Anodenbeladung und einem Masseverhältnis Pt : Ru von 9 : 1, die Werte schon deutlich verschlechtert sind. Durch zusätzliche Variation des Flächengewichts an Pt in der Anode konnten die CO-Toleranz und die Leistung der Membranelektrodenanordnung weiter verbessert werden.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Membranelektrodenanordnung
- 2: Kathode
- 3: Anode
- 4: protonenleitfähige Membran
- 5: erster Katalysator
- 6: protonenleitfähiges lonomer
- 7: elektrisch leitfähiger Träger
- 8: protonenleitfähiges lonomer
- 9: zweiter Katalysator
- 10: dritter Katalysator
- 11: elektrisch leitfähiger Träger

## Patentansprüche

1. Membranelektrodenanordnung (1) umfassend eine Kathode (2), eine Anode (3) und eine protonenleitfähige Membran (4), wobei
- die Kathode (2) einen ersten metallhaltigen Katalysator (5) und ein protonenleitfähiges lonomer (6) umfasst, wobei
- die Anode (3) ein protonenleitfähiges lonomer (8), einen zweiten, die Reaktion von Wasserstoff zu Protonen katalysierenden metallhaltigen Katalysator (9) und einen dritten, die Reaktion von CO zu CO₂ katalysierenden metallhaltigen Katalysator (10) umfasst, und wobei das Gesamtmasseverhältnis an Platin des zweiten Katalysators (9) und an Platin des dritten Katalysators (10) zum Gesamtmasseverhältnis an Metallen des zweiten Katalysators (9) und des dritten Katalysators (10) mit Ausnahme von Platin größer als 3:1 und kleiner oder gleich 9:1 ist, wobei das Gesamtflächengewicht an Platin des zweiten Katalysators (9) und an Platin des dritten Katalysators (10) weniger als 0,4 mg/cm² beträgt.

2. Membranelektrodenanordnung (1) nach Anspruch 1, wobei der zweite Katalysator (9) und der dritte Katalysator (10) jeweils auf einem elektrisch leitfähigen Träger (11) angeordnet sind.

3. Membranelektrodenanordnung (1) nach einem der vorhergehenden Ansprüche, wobei der zweite Katalysator (9) Platin und der dritte Katalysator (10) ausgewählt ist aus: einer Legierung, einem Metall, einem Metalloxid oder einer Mischung dieser Verbindungen, wobei die Legierung insbesondere Platin und mindestens ein Element, ausgewählt aus der Gruppe bestehend aus Ru, Rh, Ni, Cu und Ir, umfasst.

4. Membranelektrodenanordnung (1) nach Anspruch 2, wobei der elektrisch leitfähige Träger (11) ausgewählt ist aus elektrisch leitfähigem Kohlenstoff, anorganischen Oxiden und Mischungen daraus und/oder wobei der elektrisch leitfähige Träger (11) eine spezifische Oberfläche von 50 bis 1000 m²/g aufweist.

5. Membranelektrodenanordnung (1) nach einem der vorhergehenden Ansprüche, wobei das Flächengewicht an Platin des zweiten Katalysators (9) weniger als 0,3 mg/cm² beträgt und/oder wobei das Gesamtflächengewicht an Platin des zweiten Katalysators (9) und an Platin des dritten Katalysators (10) mehr als 0,015 mg/cm² und insbesondere mehr als 0,03 mg/cm² beträgt und/oder wobei das Flächengewicht an Platin des zweiten Katalysators (9) mehr als 0,015 mg/cm² und insbesondere mehr als 0,03 mg/cm² beträgt.

6. Membranelektrodenanordnung (1) nach einem der vorhergehenden Ansprüche, wobei das Masseverhältnis an Platin des ersten Katalysators (5) zum Gesamtmasseverhältnis an Metallen des zweiten Katalysators (9) und des dritten Katalysators (10) mit Ausnahme von Platin größer als 12:1, insbesondere größer als 35 : 1 ist.

7. Membranelektrodenanordnung (1) nach einem der vorhergehenden Ansprüche, wobei der erste Katalysator (5) ausgewählt ist aus Platin, Platinlegierungen, Übergangsmetallen, Übergangsmetalllegierungen und Mischungen davon, wobei das Übergangsmetall insbesondere Cobalt oder Nickel ist und/oder wobei der erste Katalysator (5) auf einem elektrisch leitfähigen Träger (7) angeordnet ist.

8. Membranelektrodenanordnung (1) nach einem der vorhergehenden Ansprüche, wobei die Membran ausgewählt ist aus der Gruppe von perfluorierten, teilfluorierten oder nichtfluorierten Materialien und/oder wobei die Schichtdicke der Membran 3 bis 20 µm beträgt.

9. Brennstoffzelle umfassend eine Membranelektrodenanordnung (1) nach einem der vorhergehenden Ansprüche.

## Claims

1. Membrane electrode assembly (1) comprising a cathode (2), an anode (3), and a proton-conductive membrane (4), wherein
- the cathode (2) comprises a first metal-containing catalyst (5) and a proton-conductive ionomer (6), wherein
- the anode (3) comprises a proton-conductive ionomer (8), a second metal-containing catalyst (9), which catalyzes the reaction of hydrogen to protons, and a third metal-containing catalyst (10), which catalyzes the reaction of CO to CO₂, and wherein the total mass ratio of platinum of the second catalyst (9) and platinum of the third catalyst (10) to the total mass ratio of metals of the second catalyst (9) and the third catalyst (10), with the exception of platinum, is greater than 3:1 and smaller than or equal to 9:1, wherein the total mass per unit area of platinum of the second catalyst (9) and of platinum of the third catalyst (10) is less than 0.4 mg/cm².

2. Membrane electrode assembly (1) according to claim 1, wherein the second catalyst (9) and the third catalyst (10) are each arranged on an electrically conductive support (11).

3. Membrane electrode assembly (1) according to one of the preceding claims, wherein the second catalyst (9) is platinum and the third catalyst (10) is selected from: an alloy, a metal, a metal oxide, or a mixture of these compounds, wherein the alloy comprises in particular platinum and at least one element selected from the group consisting of Ru, Rh, Ni, Cu and Ir.

4. Membrane electrode assembly (1) according to claim 2, wherein the electrically conductive support (11) is selected from electrically conductive carbon, inorganic oxides and mixtures thereof and/or wherein the electrically conductive support (11) has a specific surface area of 50 to 1000 m²/g.

5. Membrane electrode assembly (1) according to one of the preceding claims, wherein the mass per unit area of platinum of the second catalyst (9) is less than 0.3 mg/cm² and/or wherein the total mass per unit area of platinum of the second catalyst (9) and of platinum of the third catalyst (10) is more than 0.015 mg/cm² and in particular more than 0.03 mg/cm² and/or wherein the mass per unit area of platinum of the second catalyst (9) is more than 0.015 mg/cm² and in particular more than 0.03 mg/cm².

6. Membrane electrode assembly (1) according to one of the preceding claims, wherein the mass ratio of platinum of the first catalyst (5) to the total mass ratio of metals of the second catalyst (9) and the third catalyst (10), with the exception of platinum, is greater than 12:1, in particular greater than 35:1.

7. Membrane electrode assembly (1) according to one of the preceding claims, wherein the first catalyst (5) is selected from platinum, platinum alloys, transition metals, transition metal alloys and mixtures thereof, wherein the transition metal is in particular cobalt or nickel and/or wherein the first catalyst (5) is arranged on an electrically conductive support (7).

8. Membrane electrode assembly (1) according to one of the preceding claims, wherein the membrane is selected from the group of perfluorinated, partially fluorinated or non-fluorinated materials and/or wherein the layer thickness of the membrane is 3 to 20 µm.

9. A fuel cell comprising a membrane electrode assembly (1) according to one of the preceding claims.

## Revendications

1. Ensemble membrane-électrode (1) comprenant une cathode (2), une anode (3) et une membrane conductrice de protons (4), dans lequel
- la cathode (2) comprend un premier catalyseur (5) contenant du métal et un ionomère conducteur de protons (6), dans lequel
- l'anode (3) comprend un ionomère conducteur de protons (8), un deuxième catalyseur (9) contenant un métal, qui catalyse la réaction d'hydrogène en protons, et un troisième catalyseur (10) contenant du métal, qui catalyse la réaction de CO en CO₂, et dans lequel le rapport massique total du platine du deuxième catalyseur (9) et du platine du troisième catalyseur (10) par rapport au rapport massique total des métaux du deuxième catalyseur (9) et du troisième catalyseur (10) à l'exception du platine est supérieur à 3:1 et est inférieur ou égal à 9:1, dans lequel le poids total par unité de surface du platine du deuxième catalyseur (9) et du platine du troisième catalyseur (10) est inférieur à 0,4 mg/cm².

2. Ensemble membrane-électrode (1) selon la revendication 1, dans lequel le deuxième catalyseur (9) et le troisième catalyseur (10) sont disposés respectivement sur un support électriquement conducteur (11).

3. Ensemble membrane-électrode (1) selon l'une quelconque des revendications précédentes, dans lequel le deuxième catalyseur (9) est du platine et le troisième catalyseur (10) est choisi parmi : un alliage, un métal, un oxyde de métal ou un mélange desdits composés, dans lequel l'alliage comprend en particulier du platine et au moins un élément choisi parmi le groupe constitué de Ru, Rh, Ni, Cu et Ir.

4. Ensemble membrane-électrode (1) selon la revendication 2, dans lequel le support électriquement conducteur (11) est choisi parmi un carbone électriquement conducteur, des oxydes inorganiques et des mélanges de ceux-ci et/ou dans lequel le support électriquement conducteur (11) présente une surface spécifique de 50 à 1000 m²/g.

5. Ensemble membrane-électrode (1) selon l'une quelconque des revendications précédentes, dans lequel le poids par unité de surface du platine du deuxième catalyseur (9) est inférieur à 0,3 mg/cm² et/ou dans lequel le poids total par unité de surface du platine du deuxième catalyseur (9) et du platine du troisième catalyseur (10) est supérieur à 0,015 mg/cm² et en particulier est supérieur à 0,03 mg/cm² et/ou dans lequel le poids par unité de surface du platine du deuxième catalyseur (9) est supérieur à 0,015 mg/cm² et en particulier est supérieur à 0,03 mg/cm².

6. Ensemble membrane-électrode (1) selon l'une quelconque des revendications précédentes, dans lequel le rapport massique du platine du premier catalyseur (5) par rapport au rapport massique total des métaux du deuxième catalyseur (9) et du troisième catalyseur (10) à l'exception du platine est supérieur à 12:1, en particulier est supérieur à 35:1.

7. Ensemble membrane-électrode (1) selon l'une quelconque des revendications précédentes, dans lequel le premier catalyseur (5) est choisi parmi du platine, des alliages de platine, des métaux de transition, des alliages de métaux de transition et des mélanges de ceux-ci, dans lequel le métal de transition est en particulier du cobalt ou du nickel, et/ou dans lequel le premier catalyseur (5) est disposé sur un support électriquement conducteur (7).

8. Ensemble membrane-électrode (1) selon l'une quelconque des revendications précédentes, dans lequel la membrane est choisie parmi le groupe de matériaux perfluorés, partiellement fluorés ou non fluorés et/ou dans lequel l'épaisseur de couche de la membrane va de 3 à 20 µm.

9. Pile à combustible comprenant un ensemble membrane-électrode (1) selon l'une quelconque des revendications précédentes.
